(19) Europäisches Patentamt
European Patent Office
Office européen des brevets

(11) Veröffentlichungsnummer : **0 291 662 B1**

# (12) EUROPÄISCHE PATENTSCHRIFT

(45) Veröffentlichungstag der Patentschrift : **11.09.91 Patentblatt 91/37**

(51) Int. Cl.[5] : **C08F 8/00**

(21) Anmeldenummer : **88104727.8**

(22) Anmeldetag : **24.03.88**

(54) **Verfahren zur Herstellung eines verzweigten Acrylatcopolymerisats mit Polymerisierbaren Doppelbingungen und seine Verwendung.**

Verbunden mit 88902839.5/0373165 (europäische Anmeldenummer/Veröffentlichungsnummer) durch Entscheidung vom 03.12.90.

(30) Priorität : **28.03.87 DE 3710343**

(43) Veröffentlichungstag der Anmeldung : **23.11.88 Patentblatt 88/47**

(45) Bekanntmachung des Hinweises auf die Patenterteilung : **11.09.91 Patentblatt 91/37**

(84) Benannte Vertragsstaaten : **AT BE CH DE ES FR GB IT LI NL SE**

(56) Entgegenhaltungen :
**EP-A- 0 158 161**
**DE-A- 2 336 517**
**DE-A- 2 635 122**
**DE-A- 3 400 966**
**FR-A- 2 313 418**

(73) Patentinhaber : **BASF Lacke + Farben Aktiengesellschaft
Max-Winkelmann-Strasse 80
W-4400 Münster (DE)**

(72) Erfinder : **Jung, Werner Alfons, Dr.
Uhrwerkerstrasse 65
W-4715 Ascheberg (DE)**

(74) Vertreter : **Leifert, Elmar, Dr.
BASF Lacke + Farben AG Patentabteilung
Max-Winkelmann-Strasse 80 Postfach 61 23
W-4400 Münster (DE)**

EP 0 291 662 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung eines Überzugsmittels, enthaltend ein Acrylatcopolymerisat mit freien, polymerisierbaren Doppelbindungen.

Aus der DE-OS 3319061 ist ein Acrylatcopolymerisat mit freien Doppelbindungen bekannt, welches hergestellt wird durch Umesterung der Methylesterkomponente eines Copolymerisats von Acrylsäureestern und Methacrylsäureestern mit einem Polyolacrylat bzw. Polyolmethacrylat. Die Mittel werden insbesondere zum Imprägnieren von Weichstoff-Flachdichtungen für Verbrennungskraftmaschinen verwendet. Die Vernetzung der Mittel erfolgt thermisch unter Zusatz von Peroxiden oder mittels energiereicher Elektronenstrahlung über die freien Doppelbindungen des Methacrylsäure- bzw. Acrylsäureesters.

Die Vernetzung über die freien Doppelbindungen verläuft jedoch nicht optimal, und so besteht der Wunsch nach einer Zusammensetzung, die leicht und schnell ohne Abspaltung toxikologisch bedenklicher Stoffe aushärtet und die gute Eigen-schaften in bezug auf Lösemittelbeständigkeit und Chemikalienbeständigkeit aufweist.

Aus der DE-A-3400966 sind mit Luftsauerstoff härtbare Massen bekannt, die hergestellt werden durch Umsetzung von Hydroxyl- und ggf. Epoxidgruppen aufweisenden Copolymerisaten mit Monocarbonsäuren mit 12 bis 26 C-Atomen und mindestens einer olefinisch ungesättigten Doppelbindung. Zum Aufbau des Copolymerisats werden keine Monomeren mit mehr als einer Doppelbindung pro Molekül verwendet. Die beschriebenen Massen können ohne Lösungsmittel verarbeitet werden. Sie werden verwendet als härtbare Dichtungsmassen.

Aus der EP-A-158161 sind hydroxylgruppenhaltige Acrylatcopolymerisate bekannt, die hergestellt werden durch Copolymerisation von 3 bis 25 Gew.-%, bezogen auf das Gesamtgewicht aller Monomeren, Monomeren mit mindestens zwei polymerisierbaren, olefinisch ungesättigten Doppelbindungen.

Durch die Verwendung dieser mehrfach funktionellen Monomeren wird eine Verzweigung des Acrylatcopolymerisats erreicht. Gemäß der EP-A-158161 werden die beschriebenen hydroxylgruppenhaltigen Acrylatcopolymerisate vernetzt mit Melamin-Formaldehyd-Harzen oder mit Polyisocyanaten. Die erhaltenen Überzüge weisen gute Eigenschaften in bezug auf Chemikalienfestigkeit und Lösemittelbeständigkeit auf. Von Nachteil sind jedoch die toxikologisch nicht ganz unbedenklichen Vernetzungsmittel, da sie unerwünschte Stoffe abspalten können. Die beschriebenen Mittel sind insbesondere geeignet zur Reparaturlackierung von Kraftfahrzeugen.

Die der Erfindung zugrundeliegende Aufgabe wird durch ein Verfahren zur Herstellung eines Überzugsmittels, enthaltend ein Acrylatcopolymerisat mit freien Doppelbindungen, welches herstellbar ist in einem Zweistufenverfahren, gelöst, das dadurch gekennzeichnet ist, daß in einer ersten Stufe ein vorvernetztes, nicht-geliertes Acrylatcopolymerisat (A) hergestellt wird durch Copolymerisation von

a) 3 bis 30 Gew.-% ethylenisch ungesättigten Monomeren mit mindestens zwei polymerisierbaren Doppelbindungen,
b) 5 bis 60 Gew.-% Monomeren mit einer funktionellen Gruppe und
c) weiteren ethylenisch ungesättigten Monomeren, wobei die Summe aller Monomeren 100 Gew.-% beträgt, in einem organischen Lösungsmittel bei 70 bis 130°C, vorzugsweise bei 90 bis 120°C, unter Verwendung von Initiatoren und mindestens 0,5 Gew.-%, vorzugsweise mindestens 2,5 Gew.-%, bezogen auf das Gesamtgewicht der Monomeren, eines Polymerisationsreglers, und daß in einer zweiten Stufe das gebildete Polymerisat (A) mit Verbindungen (B) umgesetzt werden, die neben einer mit den funktionellen Gruppen von (b) des Polymerisats (A) reaktionsfähigen Gruppe mindestens eine ethylenisch ungesättigte polymerisierbare Doppelbindung enthalten.

Als Komponente a) können vorteilhaft Verbindungen der allgemeinen Formel

$$CH_2 = \overset{R}{\overset{|}{C}} - \overset{O}{\overset{\|}{C}} - X - (CH_2)_n - X - \overset{O}{\overset{\|}{C}} - \overset{R}{\overset{|}{C}} = CH_2$$

mit

R = H oder $CH_3$,
X = O, NR', S mit R' = H, Alkyl, Aryl
n = 2 bis 8

verwendet werden.

Beispiele für derartige Verbindungen sind Hexandioldiacrylat, Hexandioldimethacrylat, Glykoldiacrylat, Glykoldimethacrylat, Butandioldiacrylat, Butandioldimethacrylat, Trimethylolpropantriacrylat und Trimethylolpropantrimethacrylat. Selbstverständlich können auch Kombinationen dieser mehrfach ungesättigten Monomeren verwendet werden. Weiterhin ist auch Divinylbenzol geeignet als Komponente a).

Weiterhin kann die Komponente a) vorteilhaft ein Umsetzungsprodukt aus einer Carbonsäure, die eine polymerisierbare, olefinisch ungesättigte Doppelbindung aufweist, und Glycidylacrylat und/oder Glycidylmethacrylat oder eine mit einem ungesättigten Alkohol veresterte Polycarbonsäure oder ungesättigte Monocarbonsäure sein.

Ferner kann vorteilhaft als Komponente a) ein Umsetzungsprodukt eines Polyisocyanats und eines ungesättigten Alkohols oder Amins verwendet werden. Als Beispiel hierfür sei das Reaktionsprodukt aus einem Mol Hexamethylendiisocyanat und zwei Mol Allylalkohol genannt.

Eine weitere vorteilhafte Komponente a) ist ein Diester von Polyethylenglykol und/oder Polypropylenglykol mit einem mittleren Molekulargewicht von weniger als 1500, vorzugsweise von weniger als 1000, und Acrylsäure und/oder Methacrylsäure.

Die weiteren polymerisierbaren Monomeren der Komponente c) können vorteilhafterweise ausgewählt sein aus der Gruppe Styrol, Vinyltoluol, Alkylester der Acrylsäure und der Methacrylsäure, Alkoxyethylacrylate und Aryloxyethylacrylate und der entsprechenden Methacrylate, Ester der Malein- und Fumarsäure. Beispiele hierfür sind Methylacrylat, Ethylacrylat, Propylacrylat, Butylacrylat, Isopropylacrylat, Isobutylacrylat, Pentylacrylat, Isoamylacrylat, Hexylacrylat, 2-Ethylhexylacrylat, Octylacrylat, 3,5,5-Trimethylhexylacrylat, Decylacrylat, Dodecylacrylat, Hexadecylacrylat, Octadecylacrylat, Octadecenylacrylat, Pentylmethacrylat, Isoamylmethacrylat, Hexylmethacrylat, 2-Ethylbutylmethacrylat, Octylmethacrylat, 3,5,5-Trimethylhexylmethacrylat, Decylmethacrylat, Dodecylmethacrylat, Hexadecylmethacrylat, Octadecylmethacrylat, Butoxyethylacrylat oder Butoxyethylmethacrylat, Methylmethacrylat, Ethylmethacrylat, Propylmethacrylat, Isopropylmethacrylat, Butylmethacrylat, Cyclohexylacrylat, Cyclohexylmethacrylat, Acrylnitril, Methacrylnitril, Vinylacetat, Vinylchlorid und Phenoxyethylacrylat. Weitere Monomere können eingesetzt werden, sofern sie nicht zu unerwünschten Eigenschaften des Copolymerisates führen.

Die Monomerkomponente b) kann verschiedene funktionelle Gruppen tragen, je nachdem mit welcher Verbindung B) die nachfolgende Umsetzung erfolgt.

Als Komponente b) kommen vorteilhafterweise Hydroxylgruppen enthaltende ethylenisch ungesättigte Monomere in Frage. Beispiele hierfür sind Hydroxyalkylester der Acrylsäure und/oder der Methacrylsäure mit einer primären Hydroxylgruppe. Die Komponente b) kann auch zumindest teilweise ein Umsetzungsprodukt aus einem Mol Hydroxyethylacrylat und/oder Hydroxyethylmethacrylat und durchschnittlich zwei Mol Caprolacton sein. Als Hydroxylgruppen enthaltende Monomere können aber auch zum Teil hydroxylgruppenhaltige Ester der Acrylsäure und/oder der Methacrylsäure mit einer sekundären Hydroxylgruppe eingesetzt werden. Vorteilhafterweise sind dies Umsetzungsprodukte aus Acrylsäure und/oder Methacrylsäure mit dem Glycidylester einer Carbonsäure mit einem tertiären α-Kohlenstoffatom. Beispiele für Hydroxylgruppen enthaltende ethylenisch ungesättigte Monomere sind Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Beispiele für OH-Monomere mit einer sekundären OH-Gruppe sind 2-Hydroxypropylacrylat, 2-Hydroxybutylacrylat, 3-Hydroxybutylacrylat und die entsprechenden Methacrylate.

In den Fällen, wo die Monomerkomponente mit der funktionellen Gruppe b) ein Hydroxylgruppen enthaltendes Monomer mit einer ethylenisch ungesättigten Doppelbindung ist, werden als Reaktionspartner B) entweder Ester α,β-ungesättigter Carbonsäuren, α,β-ungesättigte Carbonsäuren, ethylenisch ungesättigte Monomere mit Isocyanatgruppen oder N-Alkoxy-methyl(meth)acrylamid oder analoge Amide der Fumar-, Croton- oder Dimethylacrylsäure oder Verbindungen der allgemeinen Formel (I) eingesetzt.

$$CH_2 = \overset{R}{\overset{|}{C}}-\overset{O}{\overset{\|}{C}}-\overset{R^1}{\overset{|}{N}}-X-COOR^2 \qquad (1)$$

| | |
|---|---|
| mit R = | H, Me |
| $R^1$ = | H, Alkyl, Aryl |
| $R^2$ = | Alkyl |

$$X = -\underset{\underset{O}{\|}}{C}-,\ -\underset{\underset{R^1}{|}}{CH}-,\ -\underset{\underset{OR^1}{|}}{CH}-,\ -\underset{\underset{COOR^1}{|}}{CH}-$$

Erfolgt die Umsetzung mit einem Ester α,β-ungesättigter Carbonsäuren, so wird die Doppelbindung durch eine Umesterungsreaktion in das Acrylatcopolymerisat eingeführt. Vorteilhafterweise werden als Komponente B) Ester von α,β-ungesättigten Carbonsäuren eingesetzt, deren Estergruppen nicht mehr als 4-6 Kohlenstoffatome aufweisen, wie z.B. Methylacrylat, Ethylacrylat, Propylacrylat, Butylacrylat, Isopropylacrylat, Isobutylacrylat, Pentylacrylat und die entsprechenden Methacrylate sowie die entsprechenden Ester der Fumarsäure, Maleinsäure, Crotonsäure, Dimethylacrylsäure. Die Ester α,β-ungesättigter Carbonsäuren werden in dem Fachmann bekannten Umesterungsreaktionen mit den Hydroxylgruppen des zuvor hergestellten verzweigten Acrylatcopolymerisats umgesetzt.

Handelt es sich bei der Komponente B) um eine α,β-ungesättigte Carbonsäure, so erfolgt die Umsetzung mit dem zuvor hergestellten Acrylatcopolymerisat in einer Veresterungs-reaktion.

Beispiele für geeignete Carbonsäuren sind Acrylsäure, Methacrylsäure, Crotonsäure, Fumarsäure, Maleinsäure und Dimethylacrylsäure.

Freie Doppelbindungen können auch in das Acrylatcopolymerisat eingeführt werden, indem das Hydroxylgruppen enthaltende Acrylatcopolymerisat mit Isocyanatgruppen enthaltenden Monomeren unter Ausbildung einer Urethanbindung umgesetzt wird. Dabei ist es möglich, daß das Hydroxylgruppen enthaltende Acrylatcopolymerisat auch ausschließlich sekundäre OH-Gruppen enthält. Bei den Verbindungen der Komponente B) handelt es sich vorteilhafterweise um Isocyanatoalkylester einer ungesättigten Carbonsäure der allgemeinen Formel

$$CH_2 = \overset{\overset{R}{|}}{C}-\overset{\overset{O}{\|}}{C}-O-X-NCO,$$

wobei R = H, Me, Et
und $X = (CH_2)_n$ mit n = 1 bis 12

bedeuten. Die Komponente B) kann vorteilhafterweise auch ein N-Alkoxymethylacrylamid oder -derivat oder analog Amide der Fumar-, Croton- oder Dimethylacrylsäure sein oder eine Verbindung, die der allgemeinen Formel (1) entspricht:

$$CH_2 = \overset{\overset{R}{|}}{C}-\overset{\overset{O}{\|}}{C}-\overset{\overset{R^1}{|}}{N}-X-COOR^2 \qquad (1)$$

mit R = H, Me
$R^1$ = H, Alkyl, Aryl
$R^2$ = Alkyl

$$X = -\underset{\underset{O}{\|}}{C}-,\ -\underset{\underset{R^1}{|}}{CH}-,\ -\underset{\underset{OR^1}{|}}{CH}-,\ -\underset{\underset{COOR^1}{|}}{CH}-$$

Beispiele für solche Verbindungen sind Methoxymethylacrylamid, Methoxymethylmethacrylamid, Butoxymethylacrylamid, Butoxymethylmethacrylamid, Isobutoxymethylacrylamid, Isobutoxymethylmethacrylamid, Glykolsäurederivate, wie Methylacrylamidoglykolatmethylether, Butylacrylamidoglykolatbutylether, Methylacrylamidoglykolat und Butylacrylamidoglykolat.

Das in einer ersten Stufe hergestellte verzweigte Acrylatcopolymerisat kann auch als funktionelle Gruppen Epoxidgruppen enthalten. In diesem Fall wird das gebildete Acrylatcopolymerisat mit einer Verbindung B) umgesetzt, die ein ethylenisch ungesättigtes Monomer mit einer Carboxyl- oder Aminogruppe ist. Geeignete Monomere b) sind beispielsweise Glycidylester ungesättigter Carbonsäuren oder Glycidylether von ungesättigten Carbonsäuren oder Glycidylether von ungesättigten Verbindungen. Beispielhaft seien genannt Glycidylacrylat, Glycidylmethacrylat, Glycidylester der Malein- und Fumarsäure, Glycidylvinylphthalat, Glycidylallylphthalat, Glycidylallylmalonat. Die Epoxidgruppen des funktionellen Acrylatcopolymerisats werden dann mit den Carboxyl- oder Aminogruppen der Verbindung B) umgesetzt. Diese Verbindungen sind vorteilhafterweise ausgewählt aus der Gruppe Acrylsäure, Methacrylsäure, Crotonsäure, Dimethylacrylsäure, Fumarsäuremonomethylester, Umsetzungsprodukt aus Carbonsäureanhydriden und Hydroxyalkylestern α,β-ungesättigter Säuren, so z.B. Addukte aus Hexahydrophthalsäureanhydrid, Phthalsäureanhydrid, Tetrahydrophthalsäureanhydrid oder Maleinsäureanhydrid und Hydroxyethyl(meth)acrylat, Hydroxypropyl(meth)- acrylat, Hydroxybutyl(meth)acrylat. Die Verbindung B) kann vorteilhafterweise auch t-Butylaminoethyl(meth)acrylat, Bisacrylamidoessigsäure oder Bis(acrylamidoethyl)amin sein. Bevorzugt werden Verbindungen mit mehreren Doppelbindung eingesetzt, so z.B. Bisacrylamidoessigsäure.

Die Monomerkomponente b) kann vorteilhafterweise auch ein Monomer mit einer Esterfunktion sein. Vorteilhafterweise sollte der Veresterungsalkohol nicht mehr als 6 Kohlenstoffatome enthalten. So kommen als Komponente b) Alkylester von Acrylsäure, Methacrylsäure, Crotonsäure, Malein- und Fumarsäure, wie z.B. die entsprechenden Methylester, Ethylester, Propylester, Isopropylester, Butylester, Isobutylester, Pentylester und Hexylester in Frage. Längerkettige Alkoholreste in der Estergruppe sind weniger günstig, da ihre Umsetzung und ihr Abdestillieren nach der Umsetzung zu hohe Temperaturen erfordert. Bei dem Reaktionspartner B) handelt es sich um ethylenisch ungesättigte Monomere mit OH-, NH-oder SH-Funktionen, z.B. Hydroxyalkylester von Acrylsäure und Methacrylsäure, Allylalkohol, Crotylalkohol, Methylvinylcarbinol, Allylamin, Crotylamin, Allylmercaptan, Crotylmercapton. Das Reaktionsprodukt wird dann durch Umesterungs- oder Umamidierungsreaktionen erhalten. Diese Reaktionen sind dem Fachmann bekannt und bedürfen keiner weiteren Erläuterung.

Die Monomerkomponente b) kann auch eine NCO-Gruppe enthalten. Auf diese Weise wird das erhaltene Acrylatcopolymerisat vorteilhafterweise kombiniert mit Verbindungen B), die Verbindungen mit ethylenisch ungesättigten Doppelbindungen und einer OH-, NH-, SH-oder COOH-Gruppe sind. Die Monomeren b) werden vorzugsweise ausgewählt aus der Gruppe der Isocyanatoalkylester ungesättigter Carbonsäuren, wie z.B. Isocyanatoethyl(meth)acrylat, Isocyanatobutylmethacrylat oder vinylische Isocyanate, wie Vinylisocyanat, m-Isopropenyl-α,α-dimethylbenzylisocyanat. Als Komponente b) können auch Addukte beispielsweise von Isophorondiisocyanat an Hydroxyalkyl-(meth)acrylate, wie z.B. Hydroxyethylmethacrylat, eingesetzt werden. Es ist vorteilhaft, für die Addition solche Verbindungen auszuwählen, die neben der OH-, NH-, SH- oder COOH-Funktion zwei oder mehr Doppelbindungen enthalten.

Vorteilhafterweise kann die Monomerkomponente b) ein N-Alkoxymethylacrylamid oder -derivat oder eine Verbindung der allgemeinen Formel (1) sein :

$$CH_2 = \overset{R}{\overset{|}{C}}-\overset{O}{\overset{\|}{C}}-\overset{R^1}{\overset{|}{N}}-X-COOR^2 \qquad (1)$$

mit R = H, Me
$R^1$ = H, Alkyl, Aryl
$R^2$ = Alkyl

$$X = \underset{\underset{O}{\|}}{-C-},\ \underset{\underset{R^1}{|}}{-CH-},\ \underset{\underset{OR^1}{|}}{-CH-},\ \underset{\underset{COOR^1}{|}}{-C}H-$$

Das auf diese Weise gebildete Acrylatcopolymerisat wird kombiniert mit Verbindungen B), die neben einer polymerisierbaren Doppelbindung OH-, NH- oder SH-Funktionen haben. Beispiele für die Monomeren b) sind N-Alkoxymethyl(meth)-acryl-amide, wie Methoxymethylacrylamid, Methoxymethylmethacrylamid, Isobutoxymethylacrylamid, Isobutoxymethylmethacrylamid sowie Alkoxy[(1-OXO-2-propenyl)amino]-essigsäurealkylester(Alkoxy-(meth)acrylamidoglykolaralkylether).

Bei der Herstellung des Acrylatcopolymeren (A) ist darauf zu achten, daß ein vorvernetztes, aber nicht geliertes Copolymerisat erhalten wird. Dies ist durch geeignete Polymerisationsbedingungen möglich. Durch die Verwendung von Monomeren mit mindestens zwei ethylenisch ungesättigten Gruppen wird eine Vorvernetzung des Acrylatcopolymerisats hervorgerufen, die aufgrund der speziellen Reaktionsbedingungen trotzdem nicht zu gelierten Produkten führt. Wichtig ist, daß die Polymerisation bei Temperaturen von 70 bis 130°C, vorzugsweise bei 90 bis 120°C, bei relativ niedrigem Polymerisationsfestkörper von etwa 50 Gew.-% durchgeführt wird. Als Polymerisationsregler werden vorzugsweise Mercaptogruppen enthaltende Verbindungen,

vorzugsweise Mercaptoethanol, verwendet.

Die Auswahl des Reglers richtet sich insbesondere nach der Art der Monomerkomponente b). Enthält die Monomerkomponente b) Alkylestergruppen und soll anschließend mit Alkoholen oder Aminen umgeestert bzw. umamidiert werden, so ist es sinnvoll, weniger oder gar keine Mercaptoalkohole als Regler einzusetzen, da sonst bei der Umesterung bzw. Umamidierung die Gefahr einer vorzeitigen Gelierung besteht. Handelt es sich bei der Monomerkomponente b) um ein OH-Monomer und soll das erhaltene OH-Gruppen enthaltende Polymerisat mit einer Carboxylgruppen enthaltenden Verbindung in einer Veresterungsreaktion umgesetzt werden, ist es sinnvoll, weniger oder gar keine Mercaptocarbonsäuren als Regler zu verwenden. Es besteht sonst die Gefahr einer vorzeitigen Gelierung. 2-Mercaptopropionsäure ist in diesen Fällen trotzdem einsetzbar, da diese Verbindung eine Carboxylgruppe an einem sekundären, gesättigten Kohlenstoffatom besitzt und somit weniger reaktiv ist als eine α,β-ungesättigte Carbonsäure.

Es muß immer eine Abstimmung zwischen den Monomeren b) und der Auswahl des Reglers erfolgen, des weiteren können z.B. primäre Mercaptane und ethylenisch ungesättigte Monomere mit Isocyanatgruppen sowie Glycidylgruppen enthaltende ethylenisch ungesättigte Monomere und Mercaptocarbonsäuren als Regler nicht miteinander kombiniert werden.

Die Auswahl des Polymerisationsinitiators richtet sich nach dem Anteil der eingesetzten mehrfach ethylenisch ungesättigten Monomeren. Bei niedrigem Anteil kann man die für solche Temperaturen üblichen Initiatoren, wie z.B. Peroxyester, verwenden. Ist der Anteil der mehrfach ethylenisch ungesättigten Monomeren (a) höher, werden vorzugsweise Initiatoren, wie z.B. Azoverbindungen, eingesetzt.

Bei der in der zweiten Stufe durchgeführten Reaktion zwischen dem Acrylatcopolymerisat (A) und der Komponente (B) handelt es sich um dem Fachmann bekannte Reaktionen, wie Veresterungsreaktionen, Umesterungsreaktionen, Umamidierungsreaktionen, Additionsreaktionen unter Bildung von Urethanbindungen, Harnstoffbindungen, β-Hydroxyestergruppen.

Die Erfindung betrifft auch Überzugszusammensetzungen, die das vorvernetzte, nicht gelierte Acrylatcopolymerisat sowie ggf. Pigmente und organisches Lösungsmittel enthalten. Die Vernetzung der Zusammensetzungen erfolgt thermisch ohne oder mit Peroxid, wobei bei der Verwendung von Peroxiden bei niedrigen Temperaturen unter Zusatz von Katalysatoren und Beschleunigern für den Peroxidzerfall, wie z.B. Dimethylanilin oder andere Amine oder Metallsalze, gearbeitet wird, oder bei niedriger Temperatur oxidativ unter Zusatz von Sikkativen oder Trockenstoffen oder mittels energiereicher Elektronenstrahlung über die freien Doppelbindungen des Acrylatcopolymerisats. Die erfindungsgemäßen, freie Doppelbindungen enthaltenden Acrylatcopolymerisate, die bereits vorvernetzt sind, können auch als Zusatzstoffe zu lufttrocknenden Alkydharzen oder anderen oxidativ trocknenden Systemen oder zu Systemen auf Basis ungesättigter Polyester zur Erhöhung der Elastizität und Haftung verwendet werden.

Nachfolgend wird die Erfindung anhand eines Beispiels näher erläutert :

Herstellung eines erfindungsgemäßen verzweigten Acrylates P1 :

In einem 4 Liter-Edelstahlkessel werden vorgelegt und auf 110°C aufgeheizt :

477 Teile Xyol
477 Teile Cumol

In den Monomerentank werden eingewogen und gemischt :

150 Teile Hexandioldiacrylat
250 Teile Hydroxyethylmethacrylat
150 Teile Ethylhexylmethacrylat
200 Teile Tert.-Butylmethacrylat
100 Teile Cyclohexylmethacrylat
150 Teile Styrol
38 Teile Mercaptoethanol

In den Initiatortank werden eingewogen und gemischt :

28 Teile 2,2'-Azobis(2-methylbutannitril)
56 Teile Xylol
56 Teile Cumol

Der Inhalt des Monomerentanks wird in 3 Stunden zudosiert, der Inhalt des Initiatortanks wird in 3,5 Stunden zudosiert. Die Zuläufe werden gleichzeitig gestartet, und während der Polymerisation wird die Temperatur auf 110°C gehalten. Die so erhaltene klare Acrylatharzlösung hat eine Viskosität von 2,9 dPas und einen Festkörper von 51%.

Herstellung von Komponente P1 :

In einem Edelstahlkessel werden 920 Teile der zuvor hergestellten Acrylatharzlösung mit 369 Teilen Ethylacrylat und 2,46 Teilen Hydrochinonmonomethylether und 4,92 Teilen Dibutylzinnoxid versetzt und langsam auf 80 bis 100°C aufgeheizt. Es wird ständig ein Luftstrom durch den Kessel geleitet. Nach mehreren Stunden bei dieser Temperatur wird langsam unter Abdestillieren (über Kolonne) von Ethanol die Temperatur auf 120°C gesteigert, es werden insgesamt 520 Teile Ethanol und überschüssiges Ethylacrylat und etwas Lösemittel abdestilliert, anschließend wird mit 257 Teilen Butylacetat angelöst.

Der Festkörper der so erhaltenen Komponente P1 beträgt 54,7%, die Viskosität liegt bei 1,3 dPas.

## Patentansprüche

1. Verfahren zur Herstellung eines Überzugsmittels, enthaltend ein Acrylatcopolymerisat mit freien Doppelbindungen, herstellbar in einem Zweistufenverfahren, dadurch gekennzeichnet, daß zur Herstellung des Acrylatcopolymerisats in einer ersten Stufe ein vorvernetztes, nicht geliertes Acrylatharz (A) hergestellt wird durch Copolymerisation von

a) 3 bis 30 Gew.-% ethylenisch ungesättigten Monomeren mit mindestens zwei polymerisierbaren Doppelbindungen,
b) 5 bis 60 Gew.-% Monomeren mit einer funktionellen Gruppe und
c) weiteren ethylenisch ungesättigten Monomeren, wobei die Summe aller Monomeren 100 Gew.-% beträgt, in einem organischen Lösungsmittel bei 70 bis 130°C, vorzugsweise bei 90 bis 120°C, unter Verwendung von Initiatoren und mindestens 0,5 Gew.-%, vorzugsweise mindestens 2,5 Gew.-%, bezogen auf das Gesamtgewicht der Monomeren, eines Polymerisationsreglers, und in einer zweiten Stufe das gebildete Polymerisat (A) mit Verbindungen (B) umgesetzt wird, die neben einer mit den funktionellen Gruppen von (b) des Polymerisats (A) reaktionsfähigen Gruppe mindestens eine ethylenisch ungesättigte polymerisierbare Doppelbindung enthalten.

2. Verfahren nach Anspruch 1, dadurch gekennzeichnet, daß a) der allgemeinen Formel

$$CH_2 = \overset{R}{\overset{|}{C}}-\overset{O}{\overset{||}{C}}-X-(CH_2)_n-X-\overset{O}{\overset{||}{C}}-\overset{R}{\overset{|}{C}} = CH_2$$

entspricht, in der bedeuten :

R = H oder $CH_3$
X = O, NR' und S mit R' = H, Alkyl, Aryl
n = 2 bis 8

3. Verfahren nach Anspruch 1 bis 2, dadurch gekennzeichnet, daß die Komponente a) ein Umsetzungsprodukt aus einer Carbonsäure, die eine polymerisierbare, olefinisch ungesättigte Doppelbindung aufweist, mit Glycidylacrylat und/oder Glycidylmethacrylat ist.

4. Verfahren nach Anspruch 1 bis 3, dadurch gekennzeichnet, daß die Komponente a) eine mit einem ungesättigten, eine polymerisierbare Doppelbindung enthaltenden Alkohol veresterte Polycarbonsäure oder ungesättigte Monocarbonsäure ist.

5. Verfahren nach Anspruch 1 bis 4, dadurch gekennzeichnet, daß die Komponente a) durch Umsetzung eines Polyisocyanats mit ungesättigten, polymerisierbare Doppelbindungen enthaltenden Alkhoholen oder Aminen herstellbar ist.

6. Verfahren nach Anspruch 1 bis 5, dadurch gekennzeichnet, daß die Komponente a) ein Diester von Polyethylenglykol und/oder Polypropylenglykol mit einem mittleren Molekulargewicht von weniger als 1500, bevorzugt weniger als 1000, und Acrylsäure und/oder Methacrylsäure ist.

7. Verfahren nach Anspruch 1 bis 6, dadurch gekennzeichnet, daß b) ein Hydroxylgruppen enthaltendes Monomer ist und B) Ester α,β-ungesättigter Carbonsäuren sind.

8. Verfahren nach Anspruch 1 bis 6, dadurch gekennzeichnet, daß b) ein Hydroxylgruppen enthaltendes Monomer ist und B) eine α,β-ungesättigte Carbonsäure ist.

9. Verfahren nach Anspruch 1 bis 6, dadurch gekennzeichnet, daß b) ein hydroxylgruppenhaltiges Monomer mit und B) ein Isocyanatgruppen enthaltendes Monomer ist.

10. Verfahren nach Anspruch 1 bis 6, dadurch gekennzeichnet, daß b) ein Hydroxylgruppen enthaltendes Monomer ist und B) ein N-Alkoxymethylacrylamid oder -derivat oder ein analoges Amid der Fumar-, Croton- oder Dimethylacrylsäure ist oder der allgemeinen Formel (1) entspricht :

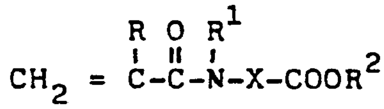

(1)

mit R = H, Me
$R^1$ = H, Alkyl, Aryl
$R^2$ = Alkyl

X = 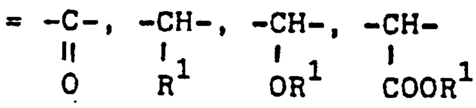

11. Verfahren nach Anspruch 1 bis 6, dadurch gekennzeichnet, daß b) Glycidylgruppen enthaltende Monomere sind und B) ein ethylenisch ungesättigtes Monomer mit einer Carboxyl- oder Aminogruppe ist.

12. Verfahren nach Anspruch 1 bis 6, dadurch gekennzeichnet, daß b) ein Monomer mit einer Esterfunktion ist, wobei der Veresterungsalkohol nicht mehr als 6 Kohlenstoffatome enthält, und B) ein ethylenisch ungesättigtes Monomer mit einer OH-, NH- oder SH-Funktion ist.

13. Verfahren nach Anspruch 1 bis 6, dadurch gekennzeichnet, daß b) ein Monomer mit einer Isocyanatgruppe ist und die Verbindungen B) ein Monomer mit einer OH-, NH-, SH- oder COOH-Funktion sind.

14. Verfahren nach Anspruch 1 bis 6, dadurch gekennzeichnet, daß b) ein N-Alkoxymethylacrylamid oder -derivat ist oder einer Verbindung der allgemeinen Formel (1) entspricht

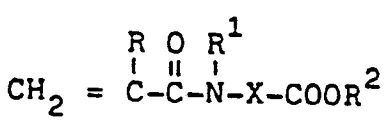

(1)

mit R = H, Me
$R^1$ = H, Alkyl, Aryl
$R^2$ = Alkyl

X = 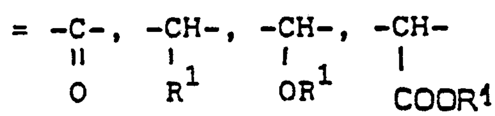

und B) ein Monomer mit einer polymerisierbaren Doppelbindung mit einer OH-, NH- oder SH-Funktion ist.

15. Verfahren nach Anspruch 1 bis 14, dadurch gekennzeichnet, daß als Polymerisationsinitiatoren Peroxyester und/oder Azoverbindungen eingesetzt werden.

16. Überzugszusammensetzung, enthaltend das vorvernetzte, nichtgelierte Acrylatcopolymerisat, hergestellt nach einem oder nach mehreren Verfahren nach Anspruch 1 bis 15 sowie ggf. Pigmente, ggf. organisches Lösungsmittel und Katalysatoren.

## Claims

1. Process for the preparation of a coating agent containing an acrylate copolymer with free double bonds, which can be prepared in a two-stage process, characterised in that, to prepare the acrylate copolymer, in a first stage, a precrosslinked, non-gelled acrylate resin (A) is prepared by copolymerisation of

a) 3 to 30% by weight of ethylenically unsaturated monomers with at least two polymerisable double bonds,
b) 5 to 60% by weight of monomers with a functional group and
c) other ethylenically unsaturated monomers, the sum of all the monomers being 100% by weight in an organic solvent at 70 to 130°C, preferably at 90 to 120°C, using initiators and at least 0.5% by weight, preferably at least 2.5% by weight, based on the total weight of the monomers, of a polymerisation regulator, and in a second stage reacting the polymer (A) formed with compounds (B) which, in addition to a group which can react with the functional groups of (b) of polymer (A), contain at least one ethylenically unsaturated polymerisable double bond.

2. Process according to Claim 1, characterised in that a) corresponds to the general formula

$$CH_2 = \overset{R}{\overset{|}{C}}-\overset{O}{\overset{\|}{C}}-X-(CH_2)_n-X-\overset{O}{\overset{\|}{C}}-\overset{R}{\overset{|}{C}} = CH_2$$

in which R = H or CH3,
X = O, NR' or S, where R' = H, alkyl or aryl, and
n = 2 to 8.

3. Process according to either of Claims 1 or 2, characterised in that component a) is a reaction product of a carboxylic acid which has a polymerisable, olefinically unsaturated double bond with glycidyl acrylate and/or glycidyl methacrylate.

4. Process according to any one of Claims 1 to 3, characterised in that component a) is a polycarboxylic acid or unsaturated monocarboxylic acid esterified with an unsaturated alcohol containing a polymerisable double bond.

5. Process according to any one of Claims 1 to 4, characterised in that component a) can be prepared by reaction of a polyisocyanate with unsaturated alcohols or amines containing polymerisable double bonds.

6. Process according to any one of Claims 1 to 5, characterised in that component a) is a diester of polyethylene glycol and/or polypropylene glycol with an average molecular weight of less than 1,500, preferably less than 1,000, and acrylic acid and/or methacrylic acid.

7. Process according to any one of Claims 1 to 6, characterised in that b) is a monomer containing hydroxyl groups and B) are esters of α,β-unsaturated acids.

8. Process according to any one of Claims 1 to 6, characterised in that b) is a monomer containing hydroxyl groups and B is an α,α-unsaturated carboxylic acid.

9. Process according to any one of Claims 1 to 6, characterised in that b) is a monomer containing hydroxyl groups with (sic) and B) is a monomer containing isocyanate groups.

10. Process according to any one of Claims 1 to 6, characterised in that b) is a monomer containing hydroxyl groups and B) is an N-alkoxymethylacrylamide or an analogous amide of fumaric acid, crotonic acid or dimethylacrylic acid or a derivative thereof, or corresponds to the general formula (1)

$$CH_2 = \overset{R}{\overset{|}{C}}-\overset{O}{\overset{\|}{C}}-\overset{R^1}{\overset{|}{N}}-X-COOR^2 \qquad (1)$$

in which R = H or Me,

$R^1$ = H, alkyl or aryl,
$R^2$ = alkyl and

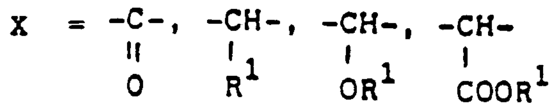 or

11. Process according to any one of Claims 1 to 6, characterised in that b) are monomers containing glycidyl groups and B) is an ethylenically unsaturated monomer with a carboxyl or amino group.

12. Process according to any one of Claims 1 to 6, characterised in that b) is a monomer which contains an ester function, the esterifying alcohol containing not more than 6 carbon atoms, and B) is an ethylenically unsaturated monomer with an OH, NH or SH function.

13. Process according to any one of Claims 1 to 6, characterised in that b) is a monomer which contains an isocyanate group and the compounds B) are a monomer with an OH, NH, SH or COOH function.

14. Process according to any one of Claims 1 to 6, characterised in that b) is an N-alkoxymethylacrylamide or derivative thereof, or corresponds to a compound of the general formula (1)

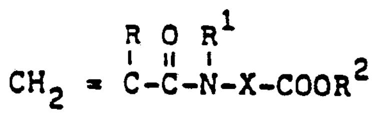 (1)

in which R = H or Me,
$R^1$ = H, alkyl or aryl,
$R^2$ = alkyl and

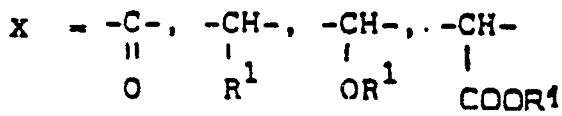

and B) is a monomer with a polymerisable double bond with an OH, NH or SH function.

15. Process according to any one of Claims 1 to 14, in which peroxy esters and/or azo compounds are used as polymerisation initiators.

16. Coating composition containing the precrosslinked, non-gelled acrylate copolymer, prepared according to one or more processes according to one or more of Claims 1 to 15 and if appropriate pigments, if appropriate an organic solvent and catalysts.

## Revendications

1. Procédé de fabrication d'un agent de revêtement contenant un copolymère d'acrylate présentant des doubles liaisons libres, que l'on peut obtenir dans un procédé en deux étapes, caractérisé par le fait que, pour la préparation du copolymère d'acrylate, dans une première étape, une résine d'acrylate (A) non gélifiée, préréticulée, est préparée par copolymérisation de :

(a) 3 à 30% en poids de monomères à insaturation éthylénique ayant au moins deux doubles liaisons polymérisables ;
(b) 5 à 60% en poids de monomères présentant un groupe fonctionnel ; et
(c) d'autres monomères à insaturation éthylénique, la somme de tous les monomères s'élevant à 100% en poids, dans un solvant organique, à une température de 70 à 130°C, de préférence, à une température de 90 à 120°C, avec utilisation d'initiateurs et d'au moins 0,5% en poids, de préférence, au moins 2,5% en poids, par rapport au poids total des monomères, d'un régulateur de polymérisation, et, dans une deuxième étape, le polymère formé (A) est mis à réagir avec des composés (B) qui contiennent, en dehors d'un groupe capable de réagir avec les groupes fonctionnels de (b) du polymère (A), au moins une double liaison d'insaturation éthylénique, polymérisable.

2. Procédé selon la revendication 1, caractérisé par le fait que (a) correspond à la formule générale :

```
              R   O                     O   R
              |   ||                    ||  |
CH2  =  C  -  C  -  X  -  (CH2)n  -  X  -  C  -  C  =  CH2
```

dans laquelle :

— R = H ou $CH_3$ ;

— X = O, NR' et S, avec R' = H, alkyle, aryle ;

— n = 2 à 8.

3. Procédé selon l'une des revendications 1 ou 2, caractérisé par le fait que le composant (a) est un produit de réaction d'un acide carboxylique, qui présente une double liaison d'insaturation oléfinique, polymérisable, avec l'acrylate de glycidyle et/ou le méthacrylate de glycidyle.

4. Procédé selon l'une des revendications 1 à 3, caractérisé par le fait que le composant (a) est un acide polycarboxylique ou un acide monocarboxylique insaturé, qui est estérifié, par un alcool insaturé, contenant une double liaison polymérisable.

5. Procédé selon l'une des revendications 1 à 4, caractérisé par le fait que le composant (a) peut être obtenu par réaction d'un isocyanate avec des alcools insaturé ; ou des amines insaturées, contenant des doubles liaisons polymérisables.

6. Procédé selon l'une des revendications 1 à 5, caractérisé par le fait que le composant (a) est un diester de polyéthylène glycol et/ou de polypropylène glycol présentant une masse moléculaire moyenne de moins de 1500, de préférence de moins de 1000, et de l'acide acrylique et/ou de l'acide méthacrylique.

7. Procédé selon l'une des revendications 1 à 6, caractérisé par le fait que (b) est un monomère à teneur en groupe hydroxyle et les composés (B) sont des esters d'acides carboxyliques à insaturation α,β.

8. Procédé selon l'une des revendications 1 à 6, caractérisé par le fait que (b) est un monomère à teneur en groupe hydroxyle et (B) est un acide carboxylique à insaturation α,β.

9. Procédé selon l'une des revendications 1 à 6, caractérisé par le fait que (b) est un monomère à teneur en groupe hydroxyle et (B) est un monomère à teneur en groupe isocyanate.

10. Procédé selon l'une des revendications 1 à 6, caractérisé par le fait que (b) est un monomère à teneur en groupe hydroxyle et (B) est un N-alcoxyméthylacrylamide ou un dérivé de N-alcoxyméthylacrylamide ou un amide analogue de l'acide fumarique, crotonique ou diméthylacrylique ou correspond à la formule générale (1) :

```
         R O R1
         | || |
CH2  =  C-C-N-X-COOR2            (1)
```

avec

— R = H, $CH_3$ ;

— $R^1$ = H, alkyle, aryle ;

— $R^2$ = alkyle ;

```
-   X = -C-,  -CH-,  -CH-,  -CH-      .
          ||     |      |      |
          O      R1     OR1    COOR1
```

11. Procédé selon l'une des revendications 1 à 6, caractérisé par le fait que les composés (b) sont des monomères contenant des groupes glycidyle et (B) est un monomère à insaturation éthylénique présentant un groupe carboxyle ou amino.

12. Procédé selon l'une des revendications 1 à 6, caractérisé par le fait que (b) est un monomère présentant une fonction ester, l'alcool d'estérification ne contenant pas plus de 6 atomes de carbone, et (B) est un monomère à insaturation éthylénique présentant une fonction OH, NH ou SH.

13. Procédé selon l'une des revendications 1 à 6, caractérisé par le fait que (b) est un monomère présentant un groupe isocyanate, et le composé (B) est un monomère présentant une fonction OH, NH, SH ou COOH.

14. Procédé selon l'une des revendications 1 à 6, caractérisé par le fait que (b) est un N-alcoxyméthylacrylamide ou un dérivé de N-alcoxyméthylacrylamide ou correspond à un composé de la formule générale (1):

$$CH_2 = \overset{R}{\overset{|}{C}}-\overset{O}{\overset{\|}{C}}-\overset{R^1}{\overset{|}{N}}-X-COOR^2 \qquad (1)$$

avec

- — $R = H, CH_3$ ;
- — $R^1 = H$, alkyle, aryle ;
- — $R^2 =$ alkyle ;

$$- \quad X = \underset{\underset{O}{\|}}{-C-},\ \underset{\underset{R^1}{|}}{-CH-},\ \underset{\underset{OR^1}{|}}{-CH-},\ \underset{\underset{COOR^1}{|}}{-CH-}\ .$$

et (B) est un monomère présentant une double liaison polymérisable ayant une fonction OH, NH ou SH.

15. Procédé selon l'une des revendications 1 à 14, caractérisé par le fait qu'on utilise, comme initiateurs de polymérisation, des peroxyesters et/ou des composés azoïques.

16. Composition de revêtement, contenant le copolymère d'acrylate non gélifié, préréticulé, préparé par le procédé tel que défini à l'une des revendications 1 à 15, de même que, le cas échéant, des pigments, le cas échéant, un solvant organique et des catalyseurs.